# EUROPÄISCHE PATENTSCHRIFT

(11) **EP 0 679 355 B1**
(45) Veröffentlichungstag und Bekanntmachung des Hinweises auf die Patenterteilung: **13.08.1997**
(21) Anmeldenummer: 95103926.2
(22) Anmeldetag: 17.03.1995
(51) Int. Cl.: A47J 36/04, H05B 6/64

(54) **Speisengefäss zur induktiven Erwärmung und Verfahren zu dessen Herstellung**
Cooking vessel for induction heating and method for making such a vessel
Récipient de cuisson pour chauffage à induction et méthode pour fabriquer un tel récipient

(30) Priorität: 26.04.1994 DE 4414439
(43) Veröffentlichungstag der Anmeldung: 02.11.1995
(73) Patentinhaber: Winterling Porzellan AG, D-95158 Kirchenlamitz (DE)
(72) Erfinder: Kunz, Otto, D-95632 Wunsiedel (DE)
(74) Vertreter: Böhme, Volker, Dipl.-Ing.

(56) Entgegenhaltungen:
- EP-A- 0 247 922
- EP-A- 0 294 503
- EP-A- 0 374 302
- DE-A- 2 326 633
- US-A- 5 155 319

## Beschreibung

Die Erfindung betrifft ein Verfahren zur Herstellung eines Speisengefäßes zur induktiven Erwärmung, bei dem ein gebrannter Gefäßscherben aus Porzellan oder Keramik mit einer aufgebrannten Glasurschicht versehen ist, bei dem ein Wärmebereich nach außen hin mit einer metallartigen Lage versehen ist, die sich in einem elektromagnetischen Wechselfeld aufgrund Induktion erwärmt, und bei dem die metallartige Lage an der Außenseite von einer im viskosen Zustand aufgebrachten keramischen Schutzschicht überzogen ist, gemäß Oberbegriff des Patentanspruchs 1.

Bei einem bekannten (US-A-5 155 319) Verfahren gemäß Oberbegriff des Patentanspruchs 1 wird auf Feinkeramik zunächst eine Wärmesammelschicht aus Ruthenium, Eisenoxid, Glassand und organischen Bestandteilen aufgebracht. Auf diese Wärmesammelschicht wird dann eine Schicht von Silber-Masse-Mischung aufgebracht, die etwa 37 % Silber, 5 % Haftglas, 3 % Goldmaterial und 55 % organische Bestandteile enthält und etwa 0,09 mm dick ist. Sodann wird ein erster Brennvorgang durchgeführt. Es wird sodann die Schutzschicht aufgebracht, die aus Eisenoxid und Glassand besteht und einem zweiten Brennvorgang unterworfen wird. Die Schichten werden jeweils einzeln auf den Gefäßscherben aufgebracht, z.B. durch Drucken.

Bei einem anderen bekannten (DE-A- 23 26 633) Speisengerät ist die metallartige Lage eine ferromagnetische Folie, die während des Herstellungsvorganges des Speisengefäßes an dem gebrannten Gefäßscherben festgelegt wird. Die Glasur, die auf den Gefäßscherben aufgebracht wird, überdeckt die Folie in ihrer Gesamtheit. Damit soll die metallartige Lage spülmaschinenfest und reinigungssicher angebracht sein. Für das nachträgliche Aufbringen der Glasur muß die metallartige Lage vorab mit einem Klebstoff angeklebt werden, der den nachfolgenden Aufbrennvorgang der Glasur aushält und nicht beeinträchtigt, damit die metallartige Lage unabhängig von der keramischen Schutzschicht dauerhaft festsitzt. Das Aufbringen der Glasur erfolgt bei einer relativ hohen Temperatur von ca. 1400° C. Es läßt sich feststellen, daß eine metallartige Lage aus ferromagnetischem Material bei diesen hohen Temperaturen diejenigen Eigenschaften stark vermindert oder verliert, die für eine Erwärmung in einem elektromagnetischen Wechselfeld aufgrund Induktion wichtig sind. Es läßt sich nicht feststellen, daß dieses bekannte Speisengefäß Eingang in die Praxis gefunden hat.

Eine Aufgabe der Erfindung ist es daher, ein Verfahren der eingangs genannten Art zu schaffen, bei dem die Verbindung der metallartigen Lage mit dem Speisengefäß ohne Beeinträchtigung der Eigenschaften der Lage im elektromagnetischen Wechselfeld trotz der Aufbrenntemperatur der keramischen Shutzschicht dauerhaft ist. Das erfindungsgemäße Verfahren weist, diese Aufgabe lösend, die kennzeichnenden Merkmale des Patentanspruchs 1 auf.

Das erfindungsgemäß hergestellte Speisengefäß weist eine metallartige Lage auf, die ohne Klebstoff aufgrund des Aufbrennvorganges dauerhaft festsitzt. Trotz der angewendeten Aufbrenntemperaturen und obwohl das Metall von Silber gebildet ist, weist diese Lage die erwünschte Erwärmungswirkung im elektromagnetischen Wechselfeld dauerhaft und ausgeprägt auf. Das verwendete Flußmaterial ist in der Zusammensetzung und den Eigenschaften auf die Silber-Masse-Mischung abgestimmt, wogegen andere Flußmaterialien in Verbindung mit der Silber-Masse-Mischung nicht geeignet sind. Die Temperatur zum Aufbrennen ist so abgestimmt, daß das Silber der aufgetragenen Schicht nicht (oberhalb 920° C) verbrennt. Durch das Aufbrennen der Schutzschicht aus Flußmaterial wird die Erwärmung der aufgetragenen Schicht im elektromagnetischen Wechselfeld verstärkt, d.h. die Schicht erwärmt sich bei gleichem Wechselfeld mit der Flußmaterial-Schutzschicht besser als ohne diese Schutzschicht. Das Aufbrennen der Glasurschicht wird durch die erfindungsgemäße Gestaltung des Wärmebereichs nicht beeinflußt.

Da die Silber-Masse-Mischung folgende Zusammensetzung und Gestaltungen aufweist: 60-75 Gew.% Silber, 5-10 Gew.% Haftglas und der Rest organische Bestandteile wie Balsam oder Collodium, läßt sich folgendes besonders gut erreichen: Siebdruckfähigkeit, Spritz- und Pinselfähigkeit, Wärmeausdehnungskoeffizient, Haftung an der Glasurschicht und induktiver Effekt.

Das Flußmaterial ist niedrigschmelzend. Da das Flußmaterial folgende Zusammensetzung und Gestaltungen aufweist: SiO₂ 30-40 Gew.%, PbO 25-35 Gew.%, B₂O₃ 5-15 Gew.%, Al₂O₃ 2-8 Gew.%, CaO 5-12 Gew.% und Na₂O 1-5 Gew.%, läßt sich besonders gut die erwünschte Verstärkung des induktiven Effektes erreichen.

Wenn die aufgetragene Schicht zu dünn wird, dann tritt die Erwärmung im elektromagnetischen Wechselfeld nicht ausreichend stark auf. Deshalb ist vorgesehen, daß die von der Silber-Masse-Mischung gebildete Schicht von 0,02 mm bis 0,035 mm dick ist. In diesem Dickenbereich tritt die für Speisengefäße erwünschte Erwärmung in einem praktisch brauchbaren Umfang auf.

Das Auftragen der Schicht von Silber-Masse-Mischung erfolgt z.B. durch Aufpinseln oder Aufsprühen. Das Auftragen der Flußmaterial-Schutzschicht erfolgt z.B. durch Aufsprühen bzw. Aufspritzen. Die Schichten werden über die Flächen hin gleichmäßig dick gestaltet. Die Flußmaterial-Schutzschicht wird bisher bei Speisengefäßen über Dekor- bzw. Farbschichten vorgesehen. Der Aufbrennvorgang der Flußmaterial-Schutzschicht erfolgt im Rahmen der Erfindung ebenso, wie wenn die Flußmaterial-Schutzschicht eine Dekorschicht überdeckt; es wird ein an sich bekannter Temperatur-Zeit-Verlauf im Brennofen angewendet; z.B. wird mit einer maximalen Temperatur von 920° C bei einer Durchlaufzeit von einer Stunde von kalt zu kalt gearbeitet. Die aufgetragene Schicht aus Silber-Masse-Mischung weist nach dem Aufbrennen keine Risse auf. Das Aufbrennen dient der festen Verbindung der Schicht aus der Silber-Masse-Mischung mit der Glasurschicht des Speisengefäßes und der festen Verbindung der Flußmaterial-Schutzschicht mit der aufgetragenen Schicht aus Silber-Masse-Mischung.

Die Erfindung ist primär für Speisengefäße aus Porzellan geeignet, weil dann, wenn bei Speisengefäßen eine induktive Erwärmung gewünscht ist, für die Speisengefäße Porzellan als Material im Hinblick auf den Einsatz der Speisengefäße günstig ist. Unter Keramik wird hier Steingut und Steinzeug verstanden. Wichtig ist der teste Sitz der Schicht von Silber-Masse-Mischung an der Glasurschicht aufgrund des Aufbrennens.

Die Erfindung umfaßt auch die Verfahrensmaßnahmen daß ein Verbundbogen aus einer Trägerpapierschicht, der Schicht von Silber-Masse-Mischung, der Schutzschicht aus Flußmaterial und einer Lackschicht bereitgestellt wird, die Trägerpapierschicht abgeweicht wird und der Schichtverbund der Schicht von Silber-Masse-Mischung, Schutzschicht von Flußmaterial und Lackschicht feucht im Wärmebereich der Glasurschicht aufgelegt, aufgerakelt und getrocknet wird und daß das mit dem Schichtverbund versehene Speisengefäß bei einer Temperatur von maximal 920° C zwecks Verbindung der Schicht von Silber-Masse-Mischung mit der Glasurschicht und Verbindung der Schutzschicht aus Flußmaterial mit der Schicht von Silber-Masse-Mischung während einer Durchlaufzeit gebrannt wird. Bei diesem Verfahren wird eine Verbindung der metallartigen Lage mit dem Speisengefäß geschaffen, die ohne Beeinträchtigung der Eigenschaften der Lage im elektromagnetischen Wechselfeld trotz der Aufbrenntemperatur der keramischen Schutzschicht dauerhaft ist.

Es wird die für Porzellan- und Keramik-Speisengefäße bekannte Dekortechnik verwendet, die mit einem Verbundbogen aus einer Trägerpapierschicht, einer Farbschicht, einer Schutzschicht von Flußmaterial und einer Lackschicht und mit dem Aufbrennen eines Schichtverbundes der Farbschicht, der Schutzschicht von Flußmaterial und der Lackschicht arbeitet. Durch die Erfindung wird also als neues Produkt geschaffen der Verbundbogen aus der Trägerpapierschicht, der Schicht von Silber-Masse-Mischung, der Schutzschicht von Flußmaterial und der Lackschicht. Dieser Verbundbogen ist im Einzelnen entsprechend den übrigen hier vorliegenden Ausführungen und Angaben gestaltet.

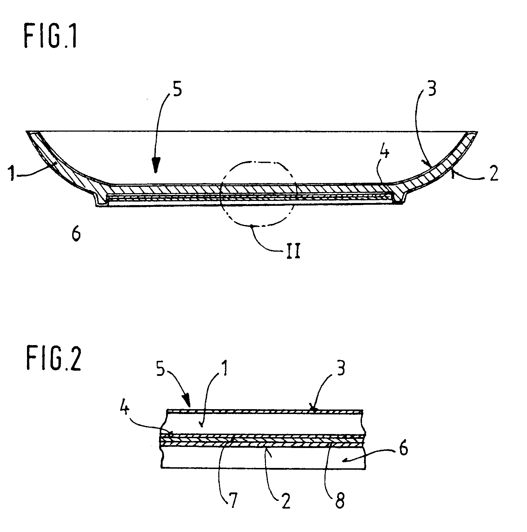

In der Zeichnung ist eine bevorzugte Ausführungform der Erfindung dargestellt und zeigt
- Fig.1: einen Schnitt durch ein Speisengefäß zur induktiven Erwärmung und
- Fig.2: eine Einzelheit II aus Fig.1 in einem gegenüber Fig.1 vergrößerten Maßstab.

Das Speisengefäß gemäß Zeichnung ist napfartig, mit einer rundumlaufenden Wandung und einem Boden ausgebildet. Es ist ein gebrannter Gefäßscherben 1 aus Porzellan an der gesamten Oberfläche, also sowohl an der Außenseite 2 als auch an der Innenseite 3 mit einer Glasurschicht 4 versehen. Das Speisengefäß bildet im Boden einen Wärmebereich 5, der an der Außenseite 2 nach unten hin durch einen simsartigen umlaufenden Fuß 6 umrandet ist. Im Wärmebereich 5 sitzt an der Glasurschicht 4 der Außenseite 2 eine Schicht 7 von Silber-Masse-Mischung, an der zur Außenseite hin eine Schutzschicht 8 aus Flußmaterial sitzt.

## Patentansprüche

1. Verfahren zur Herstellung eines
Speisengefäßes zur induktiven Erwärmung,
bei dem ein gebrannter Gefäßscherben (1) aus Porzellan oder Steinzeug/Steingut-Keramik mit einer aufgebrannten Glasurschicht (4) versehen ist,
bei dem ein Wärmebereich (5) nach außen hin mit einer metallartigen Lage versehen ist, die sich in einem elektromagnetischen Wechselfeld aufgrund Induktion erwärmt,
bei dem die metallartige Induktions-Lage an der Außenseite von einer im viskosen Zustand aufgebrachten keramischen Schutzschicht (8) überzogen ist,
bei dem die metallartige Lage von einer im viskosen Zustand aufgebrachten Schicht (7) einer aufgebrannten Silber-Masse-Mischung gebildet ist, die aus Silber, Haftglas und organischen Bestandteilen besteht und deren Eigenschaften gegen 800-850°C umfassende Aufbrenntemperaturen fest sind, und
bei dem die keramische Schutzschicht (8) von einem mit 800-850°C umfassenden Aufbrenntemperaturen aufgebrannten Flußmaterial gebildet ist, das als eine anteilsmäßig größte Komponente SiO₂ enthält,
wobei ein Verbund der Schicht von Silber-Masse-Mischung und Schutzschicht von Flußmaterial auf das Speisengefäß aufgebracht wird und
wobei das mit dem Schichtverbund versehene Speisengefäß bei einer 800-850°C umfassenden Aufbrenntemperatur zwecks Verbindung der Schicht von Silber-Masse-Mischung mit einer diese tragenden Schicht und Verbindung der Schutzschicht aus Flußmaterial mit der Schicht von Silber-Masse-Mischung während einer Durchlaufzeit gebrannt wird,
dadurch gekennzeichnet,
a) daß die metallartige Lage (7) aus Silber-Masse-Mischung auf die Glasurschicht (4) aufgebracht wird, indem ein Verbundbogen aus einer Trägerpapierschicht, der Schicht von Silber-Masse-Mischung, der Schutzschicht (8) aus Flußmaterial und einer Lackschicht bereitgestellt wird, die Trägerpapierschicht abgeweicht und der Schichtverbund der Schicht von Silber-Masse-Mischung, Schutzschicht von Flußmaterial und Lackschicht feucht im Wärmebereich der Glasurschicht aufgelegt, aufgerakelt und getrocknet wird, wobei Aufbrenntemperaturen von 600°C bis 920°C angewendet werden, und
b) daß die Silber-Masse-Mischung folgende Zusammensetzung und Gestaltungen aufweist: 60-75 Gew.% Silber, 5-10 Gew.% Haftglas und der Rest organische Bestandteile wie Balsam oder Collodium; Schichtdicke von 0,02 mm bis 0,035 mm; sowie das Flußmaterial mit SiO₂ und PbO als anteilsmäßig größte Komponenten folgende Zusammensetzung und Gestaltungen aufweist: SiO₂ 30-40 Gew.%, PbO 25-35 Gew.%, B₂O₃ 5-15 Gew.%, Al₂O₃ 2-8 Gew.%, CaO 5-12 Gew.% und Na₂O 1-5 Gew.%.

## Claims

1. A method of manufacturing a cooking vessel for induction heating, in which a fired vessel body (1) of porcelain or stoneware/earthenware ceramic is provided with a fired glaze coating (4), in which a heating region (5) is externally provided with a metallic layer which heats up by induction in an electromagnetic alternating field, in which the metallic induction layer is covered on the outside with a ceramic protective layer (8) applied in a viscous state, in which the metallic layer is formed by a layer (7) of a fired silver mass mixture applied in a viscous state and comprising silver, adhesive glass and organic constituents and having stable properties at firing temperatures of around 800°C to 850°C, and in which the ceramic protective layer (8) is formed by a fluxing material fired at firing temperatures of 800°C to 850°C and containing SiO₂ as a proportionally greatest constituent, wherein a composite of the layer of silver mass mixture and the protective layer of fluxing material is applied to the cooking vessel and wherein the cooking vessel provided with the layered composite is fired during a processing time at a firing temperature of 800°C to 850°C for the purpose of bonding the layer of silver mass mixture to a layer carrying the latter and bonding the protective layer of fluxing material to the layer of silver mass mixture, characterised in that
a) the metallic layer (7) of silver mass mixture is applied to the glaze coating (4) while a composite sheet is prepared from a supporting paper layer, the layer of silver mass mixture, the protective layer (8) of fluxing material and a lacquer layer, the supporting paper layer is soaked off, and the layered composite comprising the layer of silver mass mixture, the protective layer of fluxing material and the lacquer layer is applied damp to the heating region of the glaze coating, spread with a blade and dried, firing temperatures of 600°C to 920°C being used, and in that
b) the silver mass mixture has the following composition and formation: 60 - 70 wt.% silver, 5 - 10 wt.% adhesive glass, the remainder organic constituents such as balsam or collodium, and a layer thickness of 0.02 mm to 0.035 mm, and the fluxing material, with SiO₂ and PbO as proportionally greatest constituents, has the following composition and formation: 30 - 40 wt.% SiO₂, 25 - 35 wt.% PbO, 5 - 15 wt.% B₂O₃, 2 - 8 wt.% Al₂O₃, 5 - 12 wt.% CaO and 1 - 5 wt.% Na₂O.

## Revendications

1. Procédé de fabrication d'un récipient de cuisson pour le chauffage par induction,
dans lequel une pâte cuite (1) du récipient, en porcelaine ou en grès/grès-céramique, recouverte d'une couche émaillée (4) cuite,
dans lequel une zone de chaleur (5) est recouverte, vers l'extérieur, d'une couche métallique qui, en raison de l'induction, se réchauffe dans un champ alternatif électromagnétique,
dans lequel la couche métallique d'induction est recouverte, sur le côté extérieur, par une couche protectrice (8) en céramique appliquée à l'état visqueux,
dans lequel la couche métallique est formée par une couche (7) appliquée à l'état visqueux d'un mélange cuit masse-argent qui se compose d'argent, de verre adhésif et de composants organiques et dont les propriétés sont stables à d'importantes températures de cuisson comprises environ entre 800 et 850°C, et
dans lequel la couche protectrice (8) en céramique est formée par une matière en fusion cuite par d'importantes températures de cuisson comprises entre 800 et 850°C, laquelle matière en fusion contient de l'oxyde de silicium (SiO₂), comme étant, proportionnellement, le composant le plus important,
où un composé de la couche du mélange masse-argent et de la couche protectrice de la matière en fusion est appliqué sur le récipient de cuisson, et
où le récipient de cuisson, recouvert du composé formant couche, est cuit à une importante température de cuisson comprise entre 800 et 850°C afin de réaliser la liaison de la couche du mélange masse-argent avec une couche portant ce mélange, et la liaison de la couche protectrice de matière en fusion avec la couche du mélange masse-argent pendant un temps de transformation,
caractérisé en ce que
a) la couche métallique (7) du mélange masse-argent est appliquée sur la couche émaillée (4), tandis que l'on met en oeuvre un ensemble de composés constitué d'une couche de papier porteur, de la couche du mélange masse-argent, de la couche protectrice (8) de matière en fusion et d'une couche de vernis, la couche de papier porteur étant amollie, et le composé de couches, issu de la couche du mélange masse-argent, de la couche protectrice de matière en fusion et de la couche de vernis, est appliqué humide dans la zone de chaleur de la couche émaillée, raclé et séché, où l'on applique des températures de cuisson comprises entre 600°C et 920°C, et
b) en ce que le mélange masse-argent a la composition et les formes suivantes : entre 60 et 75 % en poids d'argent, entre 5 et 10 % en poids de verre adhésif, le reste comprenant des composants organiques tels que du baume ou du collodion ; l'épaisseur de la couche étant comprise entre 0,02 mm et 0,035 mm ; de même, la matière en fusion, contenant du SiO₂ et du PbO comme étant, proportionnellement, les composants les plus importants, a la composition et les formes suivantes : entre 30 et 40 % en poids de SiO₂, entre 25 et 35 % en poids de PbO, entre 5 et 15 % en poids de B₂O₃, entre 2 et 8 % en poids de Al₂O₃, entre 5 et 12 % en poids de CaO et entre 1 et 5 % en poids de Na₂O.
